# EUROPÄISCHE PATENTSCHRIFT

(11) **EP 0 955 539 B1**
(45) Veröffentlichungstag und Bekanntmachung des Hinweises auf die Patenterteilung: **30.06.2004**
(21) Anmeldenummer: 99107212.5
(22) Anmeldetag: 14.04.1999
(51) Int. Cl.: G01N 23/207, G01N 23/223

(54) **Kompaktes Röntgenspektrometer**
Compact X-ray spectrometer
Spectromètre à rayons x compact

(30) Priorität: 07.05.1998 DE 19820321
(43) Veröffentlichungstag der Anmeldung: 10.11.1999
(73) Patentinhaber: Bruker AXS GmbH, 76187 Karlsruhe (DE)
(72) Erfinder: Golenhofen, Rainer, 76275 Ettlingen (DE)
(74) Vertreter: KOHLER SCHMID + PARTNER

(56) Entgegenhaltungen:
- EP-A- 0 766 083
- US-A- 3 391 276
- US-A- 4 720 842
- PATENT ABSTRACTS OF JAPAN vol. 018, no. 412 (P-1780), 2. August 1994 (1994-08-02) & JP 06 123714 A (HORIBA LTD), 6. Mai 1994 (1994-05-06)
- PATENT ABSTRACTS OF JAPAN vol. 1995, no. 08, 29. September 1995 (1995-09-29) & JP 07 128262 A (HORIBA LTD), 19. Mai 1995 (1995-05-19)
- Automatische Übersetzung des JP06123714, erstellt vom Japanischen Patentamt

## Beschreibung

Die Erfindung betrifft ein Röntgenfluoreszenz-Spektrometer zur Analyse einer in einer kompakten, evakuierbaren Probenkammer mit einem Volumen ≤ 10 dm³, vorzugsweise < 1 dm³ auf einem Probenhalter in einer Meßposition angeordneten festen oder flüssigen Probe, die eine maximale lineare Ausdehnung von 1 dm aufweist, mit einer in die Probenkammer ragenden Röntgenröhre zum Bestrahlen der Probe, wobei die Röntgenröhre ein Austrittsfenster aufweist, das einen Teil der vakuumdichten Wand der Probenkammer bildet, und mit einem in einer Detektorkammer angeordneten Detektor, wobei die Detektorkammer durch ein Abschlußelement vakuumdicht von der Probenkammer trennbar ist.

Ein solches Röntgenfluoreszenz-Spektrometer ist beispielsweise bekannt durch das in dem Firmenprospekt "SPECTROMETRY SOLUTIONS SRS 3400 mit SPECTRA^{plus}" der Firma Bruker AXS GmbH aus dem Jahr 1997 beschriebene Gerät "SRS 3400".

Zur Untersuchung der Zusammensetzung einer Meßprobe wird üblicherweise in einem Röntgenfluoreszenz-Spektrometer Röntgenstrahlung auf eine Oberfläche der Probe geleitet und die von der Probe abgehende Röntgenfluoreszenz-Strahlung detektiert, deren Wellenlängenverteilung charakteristisch ist für die in der Probe vorhandenen Elemente, während ihre Intensitätsverteilung eine Aussage über die relative Häufigkeit der Probenbestandteile zuläßt. Anhand eines so gewonnenen Spektrums kann der Fachmann relativ genau erkennen, aus welchen Bestandteilen und mit welcher Mengenverteilung die untersuchte Meßprobe aufgebaut ist.

Üblicherweise wird die Probe während der Messung in einer festen Meßposition in der Probenkammer, ggf. auch drehbar gehalten, die entweder während der Messung evakuiert ist oder mit einem Schutzgas, in der Regel Helium geflutet ist. Um die Meßbedingungen herstellen zu können, muß die Probenkammer daher an ein geeignetes Pumpensystem angeschlossen sein, da ja beim Beschicken der Probenkammer mit einer neuen Meßprobe aus der umgebenden Atmosphäre Luft in die Probenkammer eindringt, die während der Messung an dieser Stelle nicht mehr vorhanden sein darf.

Zum Beschicken der Probenkammer mit einer Meßprobe und zur anschließenden Beseitigung der eindringenden Atmosphärenluft weisen die bekannten Röntgenfluoreszenz-Spektrometer eine evakuierbare Schleusenkammer auf, durch die eine zu untersuchende Meßprobe von außen eingebracht werden kann. Dabei bleibt die eigentliche Probenkammer zunächst noch von der äußeren Atmosphäre abgekoppelt. Erst nach dem Verschließen der Schleusenkammer und Evakuieren derselben (bzw. nach gründlicher Schutzgasspülung) wird die Schleusenkammer zur Probenkammer hin geöffnet und die Probe kann in ihre Meßposition transportiert werden.

Nachteilig bei den bekannten Röntgenfluoreszenz-Spektrometern ist die relativ platzaufwendige Bauweise aufgrund der Schleusenkammer sowie der recht hohe Fertigungsaufwand für den komplizierten Aufbau des Schleusenkammer-Probenkammer-Systems. Das Betriebsverfahren für dieses System, bei dem zunächst die Probenkammer von der Schleusenkammer vakuummäßig abgekoppelt werden muß, sodann die Schleusenkammer unter Atmosphärendruck gesetzt und mit der Probe beschickt wird, anschließend gegenüber der Atmosphäre wieder abgedichtet und abgepumpt wird, woraufhin die Probenkammer zur Schleusenkammer hin geöffnet und die Probe in ihre Meßposition transportiert wird, sodann die Probenkammer gegenüber der Schleusenkammer wieder abgeschlossen und schließlich unter Meßvakuum gesetzt oder mit dem entsprechenden Schutzgas gespült wird, ist nicht nur sehr zeitraubend, sondern aufgrund seiner aufwendigen Einzelschritte auch relativ störungsanfällig.

Ein weiterer Nachteil besteht darin, daß die Probenkammer von außen nicht direkt erreicht werden kann und bei Modifikationen oder Reparaturen bzw. Wartungsarbeiten innerhalb der Probenkammer das ganze System mit hohem Aufwand zerlegt werden muß.

Der Aufbau des Systems aus Schleusenkammer und Probenkammer macht auch eine umständliche interne Transportvorrichtung zum Transport der Probe aus der Schleusenkammer in die Meßposition innerhalb der Probenkammer erforderlich, welche anfällig gegen Betriebsstörungen ist.

Aufgabe der vorliegenden Erfindung ist es demgegenüber, ein Röntgenfluoreszenz-Spektrometer der eingangs geschilderten Art dahingehend zu verbessern, daß sein mechanischer Aufbau kompakter und erheblich einfacher wird, daß eine Beschickung der Probenkammer mit einer Meßprobe unaufwendiger wird, daß der dabei erforderliche Gasaustausch der beteiligten Kammern in seinen Betriebsabläufen vereinfacht wird, daß die Betriebssicherheit der Vorrichtung insbesondere bei der Probenwechselphase erhöht wird und daß die Probenkammer selbst wartungs- und reparaturfreundlicher gestaltet wird.

Erfindungsgemäß wird diese Aufgabe auf ebenso überraschend einfache wie wirkungsvolle Art und Weise dadurch gelöst, daß die Probenkammer ein bewegliches Wandelement aufweist, welches im geöffneten Zustand einen direkten Zugriff in die Probenkammer auf die Probe in Meßposition erlaubt und im geschlossenen Zustand die Probenkammer gegenüber der umgebenden Atmosphäre abdichtet. Auf diese Weise kann die bei bisherigen Röntgenfluoreszenz-Spektrometern vorgesehene Schleusenkammer vollständig eingespart werden, wodurch auch die Transporteinrichtungen zur Positionierung der Probe in ihrer Meßposition entweder vollständig entfallen oder zumindest erheblich vereinfacht werden können, was die Betriebssicherheit beim Probenwechsel entscheidend erhöht. Das Abpump- und Gasspülverfahren beim Austauschen der Probe wird ebenfalls wesentlich vereinfacht, da nur noch eine einzige Kammer, nämlich die Probenkammer belüftet, gespült bzw. evakuiert werden muß. Aufgrund des direkten Zugriffs von außen her auf die Meßposition in der Probenkammer können Wartungsarbeiten, Reparaturen oder Veränderungen in der Probenkammer völlig problemlos und ohne aufwendiges Zerlegen der gesamten Apparatur vorgenommen werden.

Besonders bevorzugt ist eine Ausführungsform des erfindungsgemäßen Röntgenfluoreszenz-Spektrometers, bei der das bewegliche Wandelement verschiebbar und/oder verschwenkbar ist. Dadurch läßt sich mit einfachen technischen Mitteln eine kombinierte Öffnungs- und Dichtungsfunktion des beweglichen Wandelements realisieren. Denkbar sind aber auch kompliziertere Anordnungen, bei denen beispielsweise das bewegliche Wandelement aufgeschraubt oder anderweitig dichcend auf eine entsprechende Öffnung in der Probenkammer aufgesetzt werden kann.

Bevorzugt ist auch eine Ausführungsform, bei der eine mit dem beweglichen Wandelement zusammenwirkende, vorzugsweise automatische Probenwechselvorrichtung vorgesehen ist. Damit läßt sich die Bedienung des erfindungsgemäßen Röntgenfluoreszenz-Spektrometers erheblich vereinfachen, es ergibt sich ein hoher Komfort in der Handhabung der Anlage und es wird eine schnelle Abfolge von Routinemessungen ermöglicht.

Eine bevorzugte Weiterbildung dieser Ausführungsform sieht vor, daß die Probenwechselvorrichtung die jeweils zu untersuchende Probe direkt aus der die Probenkammer umgebenden Atmosphäre in die Meßposition in der Probenkammer befördern kann. Damit wird die Beschickung der Probenkammer mit einer neuen Meßprobe erheblich beschleunigt, wobei weniger mechanische Schritte bei der Probenbeschickung erforderlich sind, als bei Anlagen nach dem Stand der Technik, was zu einer weiteren Erhöhung der Betriebszuverlässigkeit des erfindungsgemäßen Röntgenfluoreszenz-Spektrometers beiträgt.

Zur Erzielung einer Abschirmwirkung für die im Betrieb erzeugten Röntgenstrahlen nach außen hin ist bei einer bevorzugten Ausführungsform das bewegliche Wandelement für die von der Röntgenröhre emittierte Strahlung im wesentlichen undurchlässig.

Bei einer bevorzugten Weiterbildung dieser Ausführungsform enthält das bewegliche Wandelement Blei, wodurch die Abschirmwirkung noch weiter verbessert wird.

Besonders bevorzugt sind Ausführungsformen des erfindungsgemäßen Röntgenfluoreszenz-Spektrometers, bei denen im geöffneten Zustand des beweglichen Wandelements ein direkter Zugriff von der die Probenkammer umgebenden Atmosphäre auf ein Austrittsfenster der Röntgenröhre, auf ein Primärstrahl-Filterelement, auf das vakuumdichte Abschlußelement oder auch andere in der Probenkammer angeordneten Aufbauten möglich ist, wodurch die Wartungs- und Bedienungsfreundlichkeit noch weiter erhöht wird.

Bei einer weiteren bevorzugten Ausführungsform ist in der Probenkammer zwischen der Meßposition der Probe und dem Abschlußelement eine Aperturblende vorgesehen. Damit lassen sich die Randbereiche des von der Probe ausgehenden Fluoreszenzlichtes ausblenden, so daß ein in der Detektorkammer angeordneter Kollimator in seinem Gesichtsfeld so eingeschränkt wird, daß er mit Sicherheit ausschließlich Fluoreszenzlicht von der Probenoberfläche enthält. Auf diese Weise wird der Störuntergrund und damit das Signal-zu-Rausch-Verhältnis des Spektrometers weiter verbessert.

Bei einer vorteilhaften Weiterbildung dieser Ausführungsform ist im geöffneten Zustand des beweglichen Wandelements ein direkter Zugriff von der die Probenkammer umgebenden Atmosphäre auf die Aperturblende möglich, so daß die Aperturblende einfach ausgetauscht werden kann oder für Feinjustierungen ohne weiteres leicht zugänglich ist.

Bei einer weiteren bevorzugten Ausführungsform des erfindungsgemäßen Röntgenfluoreszenz-Spektrometers ist das vakuumdichte Abschlußelement für von der Probe emittierte Röntgenfluoreszenz-Strahlung in einem vorgegebenen Wellenlängenbereich transparent. Auf diese Weise kann der Probenraum während der Messung auch mit einem Inert-Gas geflutet werden, während der Detektorraum unter Vakuum gehalten werden kann.

Besonders einfach ist eine Weiterbildung dieser Ausführungsform, bei der das vakuumdichte Abschlußelement ein starres Wandelement ist. Wenn das röntgen-transparente Abschlußelement alle interessierenden, analytisch relevanten Wellenlängen durchläßt, ist zur Erfüllung einer Dichtungsfunktion zwischen Probenraum und Detektorraum gar keine körperliche Entfernung des Abschlußelements mehr erforderlich. Dadurch kann die Spektrometermechanik um einiges preisgünstiger hergestellt werden.

Alternativ dazu kann bei einer Weiterbildung das Abschlußelement als vakuumdicht schließender Schieber oder Klappe ausgebildet sein. Dies ermöglicht bei Messung unter Vakuum eine Entfernung des Abschlußelements, wodurch das Röntgenfluoreszenzsignal mit höherer Intensität direkt von der Probenoberfläche in den Detektorraum gelangt.

Bei einer weiteren bevorzugten Ausführungsform kann die Probenkammer mit Gas, vorzugsweise einem inerten Gas, insbesondere mit Stickstoff oder Helium geflutet werden, so daß auch Messungen an flüssigen Proben ermöglicht werden, deren Oberfläche bei einer Evakuierung der Probenkammer sonst zu sieden beginnen würde. Durch die Verwendung von Stickstoff können auf preisgünstige Weise Störgase aus der Atmosphäre der Probenkammer entfernt werden, während das preislich teurere Helium eine erhöhte Transmission für Röntgenlicht aufweist.

Bevorzugt ist auch eine Ausführungsform des erfindungsgemäßen Röntgenfluoreszenz-Spektrometers mit evakuierbarer Detektorkammer. Dadurch ergibt sich eine geringere Absorption des zu beobachtenden Röntgenfluoreszenzlichts im Strahlengang, interne Intensitätsschwankungen werden vermieden und die Detektorempfindlichkeit erhöht.

Bevorzugt wird das erfindungsgemäßen Röntgenfluoreszenz-Spektrometer wellenlängendispersiv sein, weil sich damit eine höhere Auflösung und eine größere Meßgenauigkeit als bei einer energiedispersiven Ausführung erzielen läßt.

Bei Weiterbildungen dieser Ausführungsform enthält die Detektorkammer einen ersten Kollimator, ein Analysatorelement, vorzugsweise einen Analysatorkristall, und einen zweiten Kollimator. Dies ist auch der übliche Aufbau bekannter Röntgenfluoreszenz-Spektrometer aus dem Stand der Technik, so daß bereits vorhandene Technologien, insbesondere komplett ausgestattete Detektorkammern, ohne größere Modifikationen beim erfindungsgemäßen Röntgenfluoreszenz-Spektrometer eingesetzt werden können.

Im Zusammenhang mit der erfindungsgemäß modifizierten Gestaltung der Probenkammer ist es auch vorteilhaft, wenn die Röntgenröhre mindestens die Hälfte der ihr zugewandten Oberflächenbereiche der Probe in Meßposition ausleuchten kann. Dadurch ergibt sich mittels einfacher mechanischer Maßnahmen innerhalb der Probenkammer eine hohe Ausbeute an der zu beobachtenden Röntgenfluoreszenzstrahlung, und es kann eine optimale Anpassung an gängige Probengrößen erfolgen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: einen schematischen Horizontalschnitt durch eine Ausführungsform des erfindungsgemäßen Röntgenfluoreszenz-Spektrometers; und
- Fig. 2: einen schematischen Horizontalschnitt durch das Spektrometer "SRS 3400" der Firma Bruker AXS GmbH nach dem Stand der Technik.

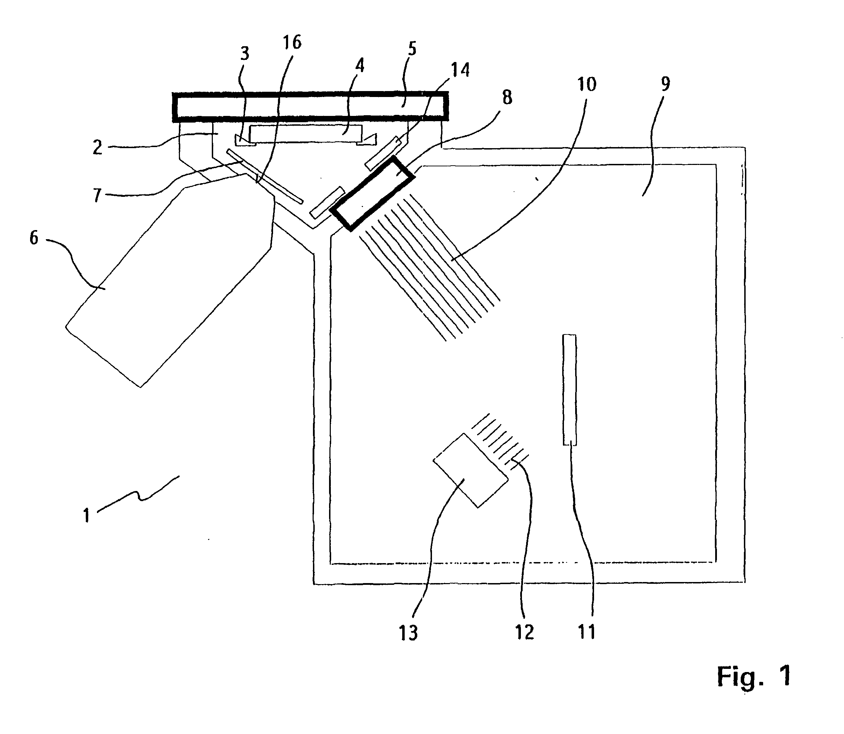

Das in Fig. 1 schematisch dargestellte erfindungsgemäße Röntgenfluoreszenz-Spektrometer 1 weist eine Probenkammer 2 mit einem Probenhalter 3 zur exakten, ortsfesten Halterung einer zu untersuchenden Meßprobe 4 in ihrer Meßposition auf.

Die Probe 4 kann ein kompakter Festkörper, beispielsweise ein aus gemalenen Gesteinsproben gepreßter oder gesinterter flacher Zylinder sein, aber beispielsweise auch eine in einem geeigneten Behältnis angeordnete Flüssigkeit, wobei die maximale lineare Ausdehnung der Probe 4 nicht größer als 0,1 m ist. Das Volumen der kompakten Probenkammern 2 ist in der Regel kleiner als 10 dm³, meist sogar kleiner als 1 dm³.

Die Probenkammer 2 ist evakuierbar und/oder wahlweise mit einem inerten Gas, insbesondere mit Stickstoff oder Helium flutbar. Zur Beschickung der Probenkammer 2 mit der Meßprobe 4 weist die Probenkammer 2 ein bewegliches Wandelement 5 auf, welches im geöffneten Zustand einen direkten Zugriff in die Probenkammer 2 auf die Probe 4 in Meßposition erlaubt und im geschlossenen Zustand die Probenkammer 2 gegenüber der umgebenden Atmosphäre abdichtet. Zur Öffnung des Probenraumes 2 kann das bewegliche Wandelement 5 verschiebbar und/oder verschwenkbar ausgeführt sein. Es kann aber auch auf andere Weise dichtend auf die entsprechende Öffnung der Probenkammer 2 aufgesetzt sein.

In die Probenkammer 2 ragt eine Röntgenröhre 6, deren aus einem Austrittsfenster 16 austretende Röntgenstrahlung mittels eines Primärstrahl-Filterelements 7 spektral aufgehärtet werden kann, bevor sie auf der Oberfläche der Probe 4 auftrifft. Die Röntgenröhre 6 ist relativ zur Probe 4 in deren Meßposition in der Probenhalterung 3 so angeordnet, daß mindestens die Hälfte der dem Austrittsfenster 16 zugewandten Oberflächenbereiche der Probe 4 ausgeleuchtet wird.

Ein Teil des von der Probenoberfläche emittierten Röntgenfluoreszenzlichts gelangt durch ein Abschlußelement 8, das für die von der Probe 4 emittierte Röntgenfluoreszenz-Strahlung in einem vorgegebenen Wellenlängenbereich transparent ist, und bei einfachen Ausführungsformen als starres Wandelement ausgeführt sein kann, in eine Detektorkammer 9.

Das Abschlußelement 8 kann als vakuumdicht schließender Schieber oder als Klappe ausgebildet sein. In jedem Falle muß immer eine Position des Abschlußelements 8 vorgesehen sein, in der dieses die Probenkammer 2 von der Detektorkammer 9, die in der Regel evakuiert ist, vakuumdicht abtrennt.

Das in die Detektorkammer 9 eintretende Röntgenfluoreszenzlicht gelangt über einen ersten Kollimator 10, ein Analysatorelement 11, welches vorzugsweise als Analysatorkristall ausgebildet ist, und einen zweiten Kollimator 12 zu einem Detektor 13, wo es aufgenommen und zu elektrischen Signalen umgewandelt wird, die einer in der Zeichnung nicht dargestellten Meßelektronik zugeführt werden.

Zur Einschränkung des Gesichtsfelds des ersten Kollimators 10 für die zu detektierende Strahlung ist in der Probenkammer 2 zwischen der Meßposition der Probe 4 und dem Abschlußelement 8 eine Aperturblende 14 vorgesehen.

Die Probenkammer 2 ist so gestaltet, daß im geöffneten Zustand des beweglichen Wandelements 5 ein direkter Zugriff auf die Probenhalterung 3 mit der Meßprobe 4, auf die Aperturblende 14 sowie auf das Primärstrahl-Filterelement 7 möglich ist. Nach Entfernen der Aperturblende 14 wird aber auch ein direkter Zugriff auf das Abschlußelement 8 und nach Entfernen des Primärstrahl-Filterelements 7 ein direkter Zugriff auf das Austrittsfenster 16 der Röntgenröhre 6, beispielsweise für Justage- oder Reparaturzwecke ermöglicht.

In der Zeichnung nicht explizit dargestellt ist eine mit dem beweglichen Wandelement 5 zusammenwirkende automatische Probenwechselvorrichtung, die die jeweils zu untersuchende Probe 4 direkt aus der die Probenkammer 2 umgebenden Atmosphäre in die Meßposition in der Probenhalterung 3 befördern kann.

Zur Abschirmung der im Betrieb von der Röntgenröhre 6 erzeugten Strahlung nach außen hin ist das bewegliche Wandelement 5 für Röntgenstrahlung undurchlässig aufgebaut und enthält in der Regel Bleischichten, -folien oder -platten.

Vorzugsweise wird das Röntgenfluoreszenz-Spektrometer 1 wellenlängendispersiv arbeiten, da sich damit eine höhere spektrale Auflösung und mithin genauere Meßergebnisse als bei einer energiedispersiven Ausführung erzielen lassen.

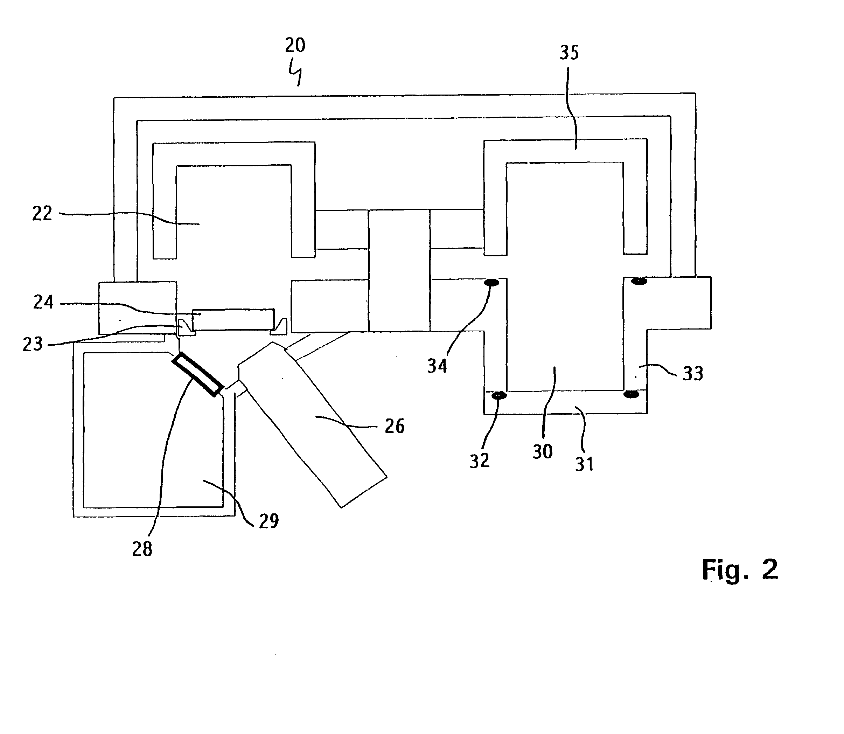

Zum Vergleich mit dem erfindungsgemäßen Aufbau ist in Fig. 2 schematisch der Aufbau eines herkömmlichen Röntgenfluoreszenz-Spektrometers 20 nach dem Stand der Technik, im vorliegenden Fall entsprechend dem oben zitierten Gerät "SRS 3400" der Firma Bruker AXS GmbH dargestellt:

Das bekannte Spektrometer 20 besitzt ebenfalls eine Probenkammer 22 mit einer durch einen Probenhalter 23 in Meßposition gehaltenen Probe 24. In die Probenkammer 22 ragt eine Röntgenröhre 26. Über einen vakuumdicht schließenden, röntgen-transparenten Abschlußschieber 28 schließt sich an die Probenkammer 22 wiederum eine Detektorkammer 29 an. Der Abschlußschieber 28 ist normalerweise geöffnet und wird nur bei Messungen, bei denen die Probenkammer 22 mit Gas geflutet wird, zur Abtrennung der evakuierten Detektorkammer 29 geschlossen.

Die Probenzuführung in die Meßposition innerhalb der Probenkammer 22 allerdings ist bei diesem bekannten Röntgenfluoreszenz-Spektrometer 20 erheblich komplizierter gestaltet. Zum Einführen der Probe 24 in die Apparatur muß ein Abschlußelement 31 an der Schleusenkammer 30 geöffnet werden und nach Einbringen der Probe 24 mittels einer Dichtung 32 wieder vakuumdicht verschlossen werden. In dieser Position ist ein erster Gehäuseabschnitt 33 über eine Dichtung 34 vakuumdicht mit einem zweiten Gehäuseabschnitt 35 verbunden, so daß die Schleusenkammer 30 abgepumpt werden kann. Danach wird der zweite Gehäuseabschnitt 35 vom ersten Gehäuseabschnitt 33 getrennt und die Probe 24 in ihre Meßposition in der Probenkammer 22, die nunmehr mit der Schleusenkammer 30 kommuniziert, durch ein Anheben, eine 180°-Drehung und ein nachfolgendes Absenken transportiert.

## Patentansprüche

1. Röntgenfluoreszenz-Spektrometer (1) mit einer kompakten, evakuierbaren Probenkammer (2) mit einem Volumen ≤ 10 dm³, vorzugsweise < 1 dm³, mit einem in der Probenkammer (2) angeordneten Probenhalter (3), auf dem in einer Meßposition eine feste oder flüssige Probe (4), anbringbar ist, die eine maximale lineare Ausdehnung von 1 dm aufweist, mit einer in die Probenkammer (2) ragenden Röntgenröhre (6) zum Bestrahlen der Probe (4), wobei die Röntgenröhre (6) ein Austrittsfenster (16) aufweist, das einen Teil der vakuumdichten Wand der Probenkammer (2) bildet, und mit einer an die Probenkammer (2) angrenzenden, separaten Detektorkammer (9), in der ein Detektor (13) angeordnet ist, wobei die Detektorkammer (9) durch ein Abschlußelement (8) vakuumdicht von der Probenkammer (2) trennbar ist,
**dadurch gekennzeichnet,**
**daß** die Probenkammer (2) ein bewegliches Wandelement (5) aufweist, welches im geöffneten Zustand einen direkten Zugriff in die Probenkammer (2) auf die Probe (4) in Meßposition erlaubt und im geschlossenen Zustand die Probenkammer (2) gegenüber der umgebenden Atmosphäre abdichtet.

2. Röntgenfluoreszenz-Spektrometer nach Anspruch 1, wobei eine mit dem beweglichen Wandelement (5) zusammenwirkende, vorzugsweise automatische Probenwechselvorrichtung vorgesehen ist.

3. Röntgenfluoreszenz-Spektrometer nach einem der vorhergehenden Ansprüche, wobei das bewegliche Wandelement (5) für die von der Röntgenröhre (6) emittierte Strahlung undurchlässig ist.

4. Röntgenfluoreszenz-Spektrometer nach einem der vorhergehenden Ansprüche, wobei im geöffneten Zustand des beweglichen Wandelements (5) ein direkter Zugriff von der die Probenkammer (2) umgebenden Atmosphäre auf das Austrittsfenster (16) der Röntgenröhre (6) möglich ist.

5. Röntgenfluoreszenz-Spektrometer nach einem der vorhergehenden Ansprüche, wobei im geöffneten Zustand des beweglichen Wandelements (5) ein direkter Zugriff von der die Probenkammer (2) umgebenden Atmosphäre auf ein, vorzugsweise automatisch wechselbares Primärstrahl-Filterelement (7) zur Filterung der aus der Röntgenröhre (6) emittierten primären Röntgenstrahlung vor Auftreffen auf die Probe (4) möglich ist.

6. Röntgenfluoreszenz-Spektrometer nach einem der vorhergehenden Ansprüche, wobei im geöffneten Zustand des beweglichen Wandelements (5) ein direkter Zugriff von der die Probenkammer (2) umgebenden Atmosphäre auf das vakuumdichte Abschlußelement (8) möglich ist.

7. Röntgenfluoreszenz-Spektrometer nach einem der vorhergehenden Ansprüche, wobei in der Probenkammer (2) zwischen der Meßposition der Probe (4) und dem Abschlußelement (8) eine, vorzugsweise austauschbare Aperturblende (14) vorgesehen ist.

8. Röntgenfluoreszenz-Spektrometer nach Anspruch 10, wobei im geöffneten Zustand des beweglichen Wandelements (5) ein direkter Zugriff von der die Probenkammer (2) umgebenden Atmosphäre auf die Aperturblende (14) möglich ist.

9. Röntgenfluoreszenz-Spektrometer nach einem der vorhergehenden Ansprüche, wobei das vakuumdichte Abschlußelement (8) für von der Probe (4) emittierte Röntgenfluoreszenz-Strahlung in einem vorgegebenen Wellenlängenbereich transparent ist.

10. Röntgenfluoreszenz-Spektrometer nach einem der vorhergehenden Ansprüche, wobei die Probenkammer (2) mit Gas, vorzugsweise einem inerten Gas, insbesondere mit Stickstoff oder Helium geflutet werden kann.

11. Röntgenfluoreszenz-Spektrometer nach einem der vorhergehenden Ansprüche, wobei das Spektrometer (1) wellenlängendispersiv ist.

12. Röntgenfluoreszenz-Spektrometer nach einem der vorhergehenden Ansprüche, wobei die Röntgenröhre (6) mindestens die Hälfte der ihr zugewandten Oberflächenbereiche der Probe (4) in Meßposition ausleuchten kann.

## Claims

1. X-ray fluorescence spectrometer (1) comprising a compact sample chamber (2) which can be evacuated, having a volume ≤ 10dm³, preferably < 1dm³, with a sample holder (3) disposed in the sample chamber (2) to which, in one measuring position, a fixed or liquid sample (4) can be applied, which has a maximum linear extension of 1dm, with an X-ray tube (6) which projects into the sample chamber (2) for irradiating the sample (4), wherein the sample tube (6) has an outlet window (16) which forms part of the vacuum-tight wall of the sample chamber (2) and with a separate detector chamber (9) which borders on the sample chamber (2) and in which a detector (13) is disposed, wherein the detector chamber (9) can be separated in a vacuum-tight manner from the sample chamber (2) through a closing element (8), **characterized in that** the sample chamber (2) has a movable wall element (5) which permits, in the open state, direct access into the sample chamber (2) on the sample (4) in the measuring position and, in the closed state, seals the sample chamber (2) relative to the surrounding atmosphere.

2. X-ray fluorescence spectrometer according to claim 1, wherein a preferably automatic, sample changing device cooperating with the moveable wall element (5) is provided.

3. X-ray fluorescence spectrometer according to one of the preceding claims, wherein the moveable wall element (5) is impervious to the radiation emitted by the X-ray tube (6).

4. X-ray fluorescence spectrometer according to one of the preceding claims, wherein, in the open state of the moveable wall element (5) direct access is possible from the atmosphere surrounding the sample chamber (2) to an outlet window (16) of the X-ray tube (6).

5. X-ray fluorescence spectrometer according to one of the preceding claims, wherein in the open state of the moveable wall element (5) direct access is possible from the atmosphere surrounding the sample chamber (2) to a primary ray filter element (7), which can preferably be exchanged automatically, for filtering the X-rays emitted from the X-ray tube (6) before they hit the sample (4).

6. X-ray fluorescence spectrometer according to one of the preceding claims, wherein in the open state of the moveable wall element (5) direct access is possible from the atmosphere surrounding the sample chamber (2) to the vacuum-tight closing element (8).

7. X-ray fluorescence spectrometer according to one of the preceding claims, wherein an aperture diaphragm (14), which can preferably be exchanged, is provided in the sample chamber (2) between the measuring position of the sample (4) and the closing element (8).

8. X-ray fluorescence spectrometer according to claim 10, wherein in the open state of the moveable wall element (5) direct access from the atmosphere surrounding the sample chamber (2) to the aperture diaphragm (14) is possible.

9. X-ray fluorescence spectrometer according to one of the preceding claims, wherein the vacuum-tight closing element (8) is transparent to X-ray fluorescence radiation emitted by the sample (4) in a predetermined wavelength range.

10. X-ray fluorescence spectrometer according to one of the preceding claims, wherein the sample chamber (2) can be washed with gas, preferably inert gas, in particular nitrogen or helium.

11. X-ray fluorescence spectrometer according to one of the preceding claims, wherein the spectrometer (1) is wavelength-dispersive.

12. X-ray fluorescence spectrometer according to one of the preceding claims, wherein the X-ray tube (6) can illuminate at least half of the surface areas of the sample (4) in its measuring position facing the X-ray tube.

## Revendications

1. Spectromètre de fluorescence de rayons X compact (1) comportant une chambre à échantillon compacte (2), dans laquelle un vide peut être réalisé et possédant un volume ≤ 10 dm³, et de préférence < 1 dm³ comportant un porte-échantillon (3), qui est disposé dans la chambre à échantillon (2) et sur lequel peut être disposé, dans une position de mesure, un échantillon solide ou liquide (4), qui possède une extension linéaire maximale de 1 dm, un tube à rayons X (6), qui pénètre dans la chambre à échantillon (2) pour irradier l'échantillon (4), le tube à rayons X (6) possède une fenêtre de sortie (16), qui constitue une partie de la paroi, étanche au vide, de la chambre à échantillon (2) et une chambre séparée à détecteur (9), qui jouxte la chambre à échantillon (2) et dans laquelle est disposé un détecteur (13), la chambre à détecteur (9) pouvant être séparée d'une manière étanche au vide, vis-à-vis de la chambre à échantillon (2) par un élément de fermeture (8),
**caractérisé en ce que**
que la chambre à échantillon (2) comporte un élément de paroi mobile (5), qui à l'état ouvert, permet un accès direct à l'échantillon (4) dans la position de mesure dans la chambre à échantillon (2) et, à l'état fermé, ferme de façon étanche la chambre à échantillon (2) vis-à-vis de l'atmosphère environnante.

2. Spectromètre de fluorescence de rayons X selon la revendication 1, dans lequel il est prévu un dispositif de préférence automatique de changement d'échantillon, qui coopère avec un élément de paroi mobile (5).

3. Spectromètre de fluorescence de rayons X selon l'une des revendications précédentes, dans lequel l'élément de paroi mobile (5) est essentiellement transparent pour le rayonnement émis par le tube à rayons X (6).

4. Spectromètre de fluorescence de rayons X selon l'une des revendications précédentes, dans lequel lorsque l'élément de paroi mobile (5) est à l'état ouvert, un accès direct est possible depuis l'atmosphère entourant la chambre à échantillon (2) à la fenêtre de sortie (16) du tube à rayons X (6).

5. Spectromètre de fluorescence de rayons X selon l'une des revendications précédentes, dans lequel lorsque l'élément de paroi mobile (5) est à l'état ouvert, il est possible d'accéder directement, depuis l'atmosphère entourant la chambre à échantillon (2), à un élément (7) de filtre de rayonnement de faisceau primaire, qui de préférence est interchangeable automatiquement et sert à filtrer le rayonnement X primaire émis par le tube à rayons X (6) avant qu'il n'atteigne l'échantillon (4).

6. Spectromètre de fluorescence de rayons X selon l'une des revendications précédentes, dans lequel lorsque l'élément de paroi mobile (5) est à l'état ouvert, un accès direct depuis l'atmosphère entourant la chambre à échantillon (2) à l'élément de fermeture (8) étanche au vide est possible.

7. Spectromètre de fluorescence de rayons X selon l'une des revendications précédentes, dans lequel un diaphragme d'ouverture (14) de préférence interchangeable est prévu dans la chambre à échantillon (2) entre la position de mesure de la chambre (4) et l'élément de fermeture (8).

8. Spectromètre de fluorescence de rayons X selon la revendication 10, dans lequel lorsque l'élément de paroi mobile (5) est à l'état ouvert, l'accès direct de l'atmosphère entourant la chambre à échantillon (2) au diaphragme d'ouverture (14) est possible.

9. Spectromètre de fluorescence de rayons X selon l'une des revendications précédentes, dans lequel l'élément de fermeture étanche au vide (8) est transparent pour un rayonnement de fluorescence X, émis par la sonde (4), dans une gamme prédéterminée de longueurs d'onde.

10. Spectromètre de fluorescence de rayons X selon l'une des revendications précédentes, dans lequel la chambre à échantillon (2) peut être remplie par un gaz de préférence un gaz inerte, notamment de l'azote ou de l'hélium.

11. Spectromètre de fluorescence de rayons X selon l'une des revendications précédentes, dans lequel le spectromètre (1) est dispersif pour les longueurs d'onde.

12. Spectromètre de fluorescence de rayons X selon l'une des revendications précédentes, dans lequel le tube à rayons X ( 6 ) peut éclairer la moitié des zones de surface, qui sont tournées vers lui, de l'échantillon (4) dans la position de mesure.
